# FASCICULE DE BREVET EUROPEEN

(11) **EP 3 701 707 B1**
(45) Date de publication et mention de la délivrance du brevet: **08.05.2024**
(21) Numéro de dépôt: 18796727.8
(22) Date de dépôt: 11.10.2018
(51) Int. Cl.: H04M 1/18, H04M 1/23, G06F 3/039, G06F 3/0362, G06F 3/048

(54) **DISPOSITIF DE PROTECTION POUR UN ÉQUIPEMENT ÉLECTRONIQUE**
SCHUTZVORRICHTUNG FÜR EINE ELEKTRONISCHE VORRICHTUNG
PROTECTION DEVICE FOR AN ELECTRONIC EQUIPMENT

(30) Priorité: 24.10.2017 FR 1760037
(43) Date de publication de la demande: 02.09.2020
(73) Titulaire: Orange, 92130 Issy-les-Moulineaux (FR)
(72) Inventeur: GAILLET, Thierry, 92326 Châtillon Cedex (FR); LEROUX, Sylvain, 92326 Châtillon Cedex (FR)
(74) Mandataire: Regimbeau
(86) Numéro de dépôt international: PCT/FR2018/052533
(87) Numéro de publication internationale: WO 2019/081832

(56) Documents cités:
- WO-A2-2016/025938
- US-A- 5 563 631
- US-A1- 2014 146 464

## Description

La présente invention concerne un dispositif de protection pour un équipement électronique, par exemple de type smartphone ou tablette tactile.

Les terminaux mobiles de type smartphone ou tablette ont généralisé l'usage des écrans tactiles en tant qu'interface primaire. Ces écrans apportent un confort d'utilisation et une ergonomie inégalées, mais s'avèrent d'une robustesse et d'une fiabilité limitée. En particulier, l'utilisateur doit avoir les mains nues, propres, et appuyer doucement sur l'écran. Celui-ci peut être brisé et rendu inopérant par des chocs modérés (par exemple une chute).

Cela rend ces terminaux tactiles inadaptés à une utilisation en conditions difficiles, tel qu'en milieu industriel (atelier, usine, etc.), en chantier, en milieu agricole, en zone d'intervention (zone d'accident, zone de catastrophe, zone de combat, etc.).

On connait des coques dites « durcies » (rugged cases), par opposition à des coques souples, qui sont généralement constituées de deux moitiés clipsables dont l'une présente une vitre de protection de l'écran. De telles coques protègent le terminal de la plupart des chocs (chute ou impact avec un outil), ainsi que des éclaboussures, de la poussière, de la boue, etc., et il devient possible d'emmener le terminal dans la nature (ces coques sont principalement faites pour le sport ou la randonnée).

Toutefois, l'écran tactile devient moins sensible du fait de la vitre de protection et des éventuelles salissures par-dessus, ce qui rend plus difficile son utilisation et nuit à l'ergonomie. De surcroît l'utilisation avec des gants n'est pas possible, alors qu'ils sont obligatoires dans de nombreuses situations (industrielles, militaires, missions de secours, etc.).

On connait par ailleurs des boutons externes qui peuvent être collés au téléphone (par exemple Air Button) ou intégrés à une coque (par exemple Clicki). Ces boutons sont connectés par une liaison sans fil à courte portée, parfois dénommée liaison de communications en champ proche (NFC, de l'anglais « Near-Field Communication »), et permettent un fonctionnement potentiellement très robuste : Air Button est par exemple utilisable sous l'eau si le terminal est dans une coque étanche.

Toutefois, de tels boutons se limitent à des saisies binaires. Ils sont par exemple parfaits pour être utilisés comme déclencheur pour prendre des photos, mais ne permettent qu'une interaction limitée avec le terminal et ne remplacent pas l'écran tactile.

Les documents US 2014/146464 et WO 2016/025938 décrivent des coques de protection pour un équipement électronique mais ces coques permettent seulement un contrôle limité de l'équipement.

Le document US 5 563 631 décrit un équipement électronique contrôlable via une bille et un bouton cliquable. Ce document ne décrit pas de solution pour protéger un équipement.

Il n'existe à ce jour pas de solution permettant d'interagir de manière fiable, rapide et intuitive avec un terminal mobile de type tactile même en conditions difficiles

Il y a ainsi un besoin pour une solution permettant à la fois de protéger un terminal mobile de type tactile et d'améliorer son interactivité.

L'invention vient améliorer la situation.

Selon un premier aspect il est proposé un dispositif de protection pour un équipement électronique comprenant un boîtier présentant un premier port de communications de données, le dispositif comprenant :
- une coque adaptée pour recevoir le boîtier de l'équipement électronique, présentant un deuxième port de communications de données adapté pour la communication de données avec le premier port de l'équipement électronique, telle que lorsque la coque reçoit le boîtier le deuxième port est couplé de manière opérationnelle avec le premier port de l'équipement pour la communication de données entre le dispositif de protection et l'équipement électronique ;
- un premier curseur déplaçable le long d'un premier axe vers une première position.

Le présent dispositif permet grâce à ses curseurs d'envoyer des valeurs analogiques à l'équipement ou d'en recevoir, c'est-à-dire une information riche exploitable directement, tout en protégeant encore mieux le boîtier et l'écran. De plus des curseurs sont très visibles, ergonomiques, et facilement manipulables. Il devient possible de remplacer voire « simuler » un écran tactile, et donc il n'est plus problématique que la sensibilité baisse voire devienne nulle du fait de la coque de protection.

En outre :
- La première position est une position de consigne ou une position cible, la position de consigne étant une position vers laquelle le premier curseur est déplaçable manuellement par l'utilisateur, le dispositif comprenant en outre un capteur de position du premier curseur, configuré pour transmettre à l'équipement électronique, par le biais du deuxième port, un signal représentatif de la première position du premier curseur. Il est ainsi possible simuler par exemple un déplacement du doigt de l'utilisateur sur un écran tactile.
- Le dispositif comprend en outre au moins un bouton, le capteur de position du premier curseur étant en outre configuré pour transmettre à l'équipement électronique, sur actionnement du bouton par un utilisateur, le signal représentatif de la première position du premier curseur. Il est ainsi possible de simuler aisément un « clic ».
- le dispositif comprenant en outre, couplé de manière opérationnelle au premier curseur, un actionneur, configuré pour, lorsqu'il reçoit depuis l'équipement électronique un signal représentatif de la position cible le long dudit axe, déplacer le premier curseur vers ladite position cible. La présence d'un actionneur permet un mode de déplacement mécanisé du curseur, en particulier pour du retour haptique.

Selon d'autres caractéristiques avantageuses et non limitatives :
- Le premier port est un port femelle, et le deuxième port est un port mâle complémentaire du port femelle, tel que lorsque la coque reçoit le boîtier le port mâle est engagé dans le port femelle de l'équipement électronique. Un tel couplage mécanique est simple, efficace et robuste.
- Le dispositif présente au moins un exemplaire du port femelle de l'équipement connecté au port mâle de sorte à dupliquer le port femelle lorsque le port mâle est engagé dans le port femelle. Le dispositif peut ainsi servir de réplicateur de ports, et permettre par exemple une recharge, tout en continuant de protéger l'équipement ;
- Le dispositif comprend en outre un deuxième curseur, déplaçable le long d'un deuxième axe vers une deuxième position de consigne.
- le premier axe et le deuxième axe sont non-colinéaires, préférentiellement sensiblement orthogonaux. Ainsi, les curseurs forment un repère il est possible d'envoyer des informations de positionnement en deux dimensions.
- La coque présente une face frontale pour une interface de l'équipement électronique lorsque la coque reçoit le boîtier, lesdits premier et deuxième axe étant sensiblement coplanaires à ladite face frontale. Grâce à cette disposition le repère formé par les curseurs coïncide avec le repère de l'écran et il devient naturel de positionner des points de l'écran avec les curseurs.
- Le premier axe s'étend sur une première face de la coque et le deuxième axe s'étend sur une deuxième face de la coque, les première et deuxième faces étant perpendiculaires entre elles et à ladite face frontale. Une architecture avec un curseur sur la face supérieure et un curseur sur la face latérale est la plus facile à prendre en main, et la plus intuitive.
- Le premier curseur est une pièce mobile protubérante apte à coulisser dans une glissière s'étendant selon ledit axe, ledit capteur de position étant adapté pour acquérir la position de la pièce mobile protubérante dans la glissière. Il s'agit d'une structure simple et robuste du curseur pour le présent dispositif.

Selon un deuxième aspect, il est proposé un ensemble d'un équipement électronique comprenant un boîtier présentant un premier port de communication de données, et un module de traitement de données ; et d'un dispositif de protection de l'équipement selon le premier aspect décrit dans les présentes, connectés via le deuxième port de communications de données couplé de manière opérationnelle avec le premier port pour la communication de données entre le dispositif de protection et l'équipement électronique.

Selon d'autres caractéristiques avantageuses et non limitatives :
- Le module de traitement de données est configuré pour interpréter le signal représentatif de la première position du premier curseur comme une commande.
- L'équipement électronique comprend une interface de type écran tactile et le dispositif est configuré pour transmettre à l'équipement électronique, par le biais du deuxième port, un signal représentatif de la première position du premier curseur, le module de traitement de données étant configuré pour simuler une stimulation de l'interface en fonction du signal représentatif de ladite position de consigne. Une telle façon de traiter les données issues du dispositif de protection permet de l'utiliser de façon universelle comme interface.
- Le dispositif de protection comprend en outre un deuxième curseur, déplaçable le long d'un deuxième axe, vers une deuxième position, et est configuré pour transmettre à l'équipement électronique, par le biais du deuxième port, un signal représentatif de la deuxième position du deuxième curseur, ladite stimulation de l'interface simulée étant un toucher au niveau d'un point de coordonnées fonction de la première position du premier curseur et de la deuxième positions du deuxième curseur. Comme expliqué, les curseurs permettent de désigner un point d'un repère à deux dimensions et donc un point d'un écran tactile. Il est ainsi possible de simuler intégralement un écran tactile et d'évacuer toutes les problématiques de pertes de sensibilité de celui-ci à cause de la coque ;
- Ledit signal représentatif d'une position cible est généré par le module de traitement de données.
- Le module de traitement de données est configuré pour émettre le signal représentatif d'une position cible en tant que retour haptique suite à la réception du signal représentatif de ladite position de consigne. Cela permet comme expliqué un fonctionnement avec retour haptique très sécurisant pour l'utilisateur, qui remplace complètement l'écran tactile.

Selon un troisième aspect est proposé un procédé de contrôle d'un équipement électronique comprenant un boîtier présentant un premier port de communications de données, et un module de traitement de données ; par un dispositif de protection de l'équipement selon le premier aspect, connectés pour des communications de données via des premier et deuxième ports de communications de données respectifs couplés de manière opérationnelle ; le procédé comprenant une transmission au module de traitement de données, depuis le capteur de position du premier curseur, du signal représentatif de la première position du premier curseur.

Selon d'autres caractéristiques avantageuses et non limitatives, le procédé comprend en outre
- Une simulation par le module de traitement de données d'une stimulation de l'interface de type écran tactile en fonction du signal représentatif de la première position du premier curseur.
- une transmission à l'actionneur du capteur depuis le module de traitement de données du signal représentatif de ladite position cible.

D'autres caractéristiques et avantages de la présente invention apparaîtront à la lecture de la description ci-après d'exemples de réalisation non limitatifs. Cette description sera donnée en référence aux dessins annexés, dans lesquels :
- La figure 1 illustre un dispositif de protection pour un équipement électronique selon un ou plusieurs modes de réalisation ;
- Les figures 2 et 3 représentent respectivement une vue avant et une vue arrière d'un dispositif de protection selon un mode de réalisation dans lequel le dispositif de protection proposé est monté sur un équipement électronique de type smartphone ;
- La figure 4 est un diagramme représentant une procédure de commande d'un équipement électronique par un dispositif de protection selon un mode de réalisation.

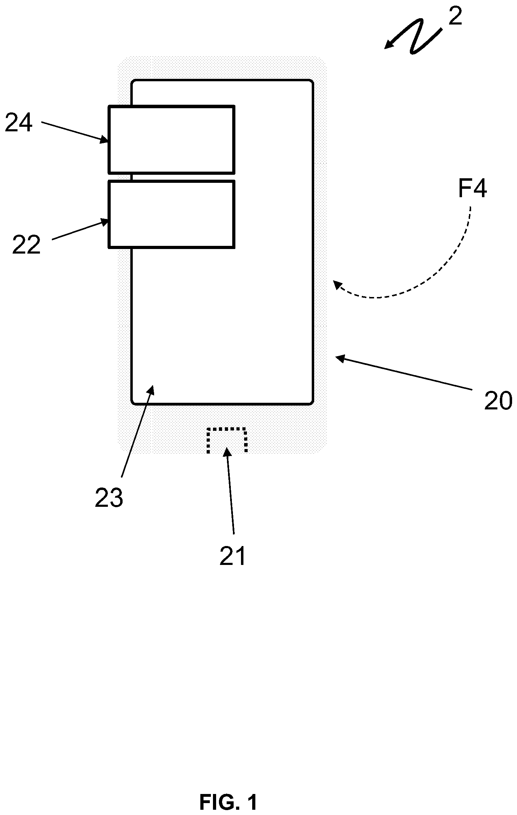

La figure 1 illustre un mode de réalisation du dispositif de protection pour un équipement électronique proposé.

L'homme du métier comprendra que, dans un ou plusieurs modes de réalisation, chaque exemplaire du présent dispositif de protection pourra n'être compatible qu'avec un modèle (ou plusieurs modèles aux caractéristiques voisines) donné d'équipement électronique 2 auquel il est adapté, en d'autres termes que l'utilisateur devra choisir le dispositif de protection en fonction du modèle d'équipement qu'il souhaite protéger. Cela dit un des avantages du dispositif proposé est que la quasi-totalité des petits équipements tels que les smartphones ou les tablettes tactiles, mais également un ordinateur portable, un appareil photo, une console portable, etc., pourront faire l'objet d'une protection par le dispositif proposé.

Par « protection » on entend une amélioration de la résistance aux chocs et/ou à l'écrasement et/ou à l'humidité et/ou aux salissures, et de façon générale tout ce qui limite les potentiels dégâts de l'environnement.

En référence à la figure 1, l'équipement 2 comprend un boîtier 20 présentant un premier port 21 de communication de données, qui est en pratique un port femelle. Par « port femelle », on entend un port définissant une cavité dans laquelle une version mâle dudit port (i.e. un connecteur protubérant) peut être engagé (inséré de sorte à établir une connexion, typiquement une connexion électrique).

Le premier port 21 est généralement également un port d'alimentation électrique de l'équipement 2 (pour la recharge), par exemple de type USB (pour « Universal Serial Bus ») (smartphone Android, Windows) ou Lightning (smartphone Apple), ou tout autre port propriétaire, par exemple situé en bas du boîtier 20.

Dans la suite de la présente description on prendra l'exemple préféré d'un smartphone ou d'une tablette tactile, dans le cas duquel le premier port 21 est souvent configuré à la fois pour l'alimentation électrique de l'équipement 2 et pour des communications de données.

Le premier port 21 est généralement disposé sur une face dite inférieure du boîtier 20 de l'équipement 2 (celle en bas lorsque l'utilisateur est en face de l'écran, voir plus loin). Un port complémentaire (mâle si le premier port 21 est un port femelle) s'engage généralement dans ce premier port 21 par une translation selon une direction orthogonale à cette face inférieure.

Dans la grande majorité des cas, les boîtiers 20 des équipements électronique 2 présentent une forme substantiellement parallélépipédique à six faces.

L'équipement 2 présente généralement quel que soit son type et son modèle une interface 23, typiquement disposée sur une face frontale du boîtier 20 (et la couvrant majoritairement), la face frontale étant sensiblement orthogonale à la face inférieure. L'interface 23 comprend généralement une interface d'entrée et une interface de sortie, l'interface de sortie étant le plus souvent un écran.

L'interface d'entrée est une dalle tactile dans le cas d'un smartphone (l'interface 23 étant alors un écran tactile ayant à la fois les fonctions d'entrée et de sortie), mais elle peut être de nombreuses autres natures, et notamment un dispositif de pointage tel qu'un pavé tactile, un clavier, un mini stick ou une souris, ou une combinaison d'interfaces de natures différentes. Dans la suite de la description, on prendra l'exemple préféré d'une interface 23 de type écran tactile : comme expliqué dans l'introduction, un tel écran est difficile à protéger tout en conservant la sensibilité tactile.

L'équipement 2 comprend généralement quel que soit son type et son modèle un module de traitement de données 22 (comprenant un ou plusieurs processeurs, couplés de manière opérationnelle à une ou plusieurs mémoires) connecté au premier port 21 et contrôlé par l'interface 23, et un module de stockage 24 (une mémoire, par exemple flash). Il peut comprendre également un module d'alimentation (comprenant éventuellement une batterie), un module de connexion sans fil, un appareil photo, etc.

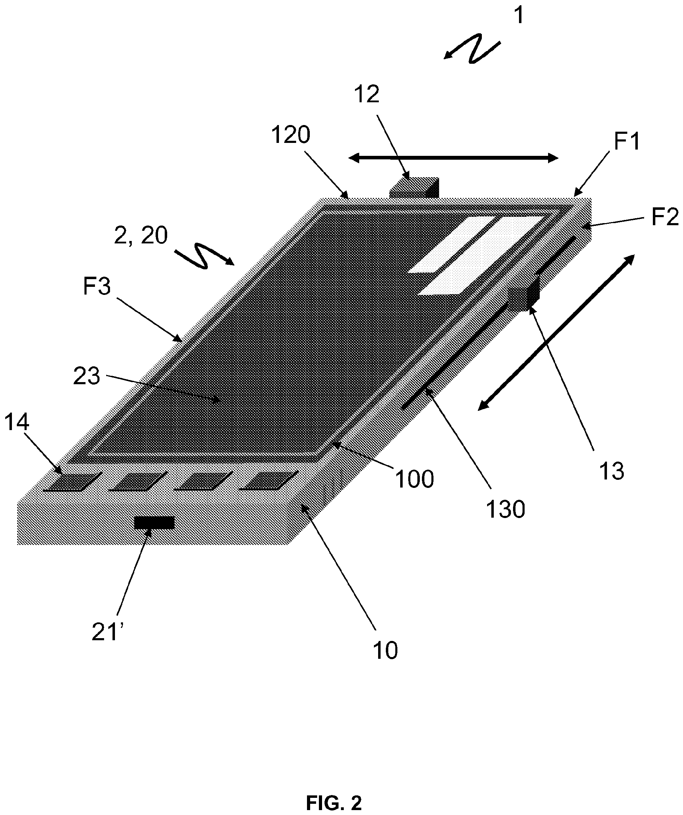

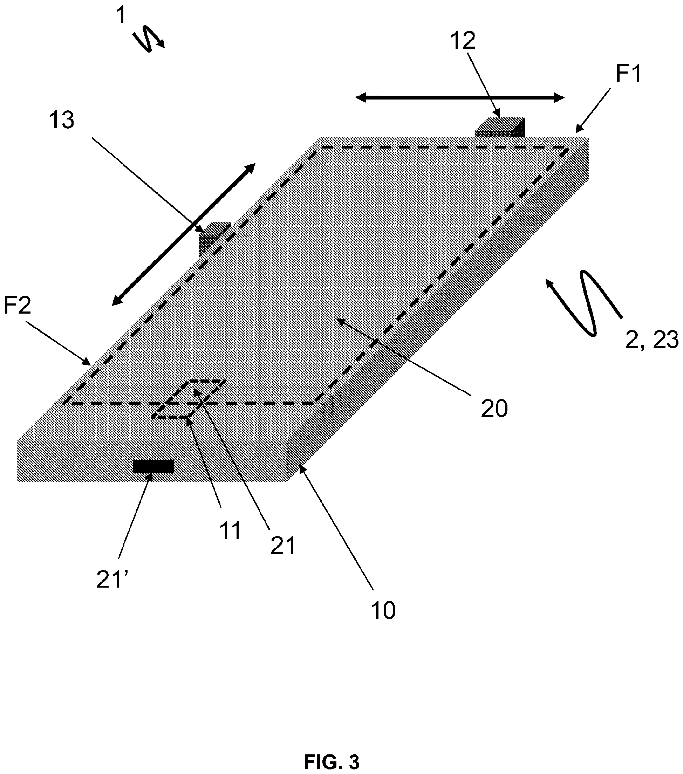

En référence aux figures 2 et 3, le présent dispositif de protection 1 comprend principalement une coque 10 adaptée pour recevoir le boîtier 20 de l'équipement 2.

C'est cette coque 10 qui assure la fonction de protection en recouvrant tout ou partie de la surface externe du boîtier 20 et en formant enveloppe épousant cette surface. Ainsi, la coque 10 absorbe l'énergie des chocs et/ou forme barrière aux liquides et salissures.

Elle peut être soit dans un matériau souple tel qu'un élastomère (par exemple du silicone), et être déformable de sorte à permettre l'insertion du boîtier 20, ou en un matériau rigide (par exemple l'acrylonitrile butadiène styrène (ABS), le polycarbonate (PC) ou un mélange des deux (ABS/PC)). Dans ce dernier cas, la coque 10 est généralement constituée de deux moitiés qui se clipsent.

Dans un ou plusieurs modes de réalisation, la coque 10 peut comprendre une zone transparente 100 pour l'interface 23, de préférence agencée de sorte que lorsque la coque 10 reçoit le boîtier 20, l'ouverture 100 soit en vis-à-vis de l'interface 23, ce qui permet de continuer de voir l'interface 23 malgré la coque 10. La zone 100 est sur une face frontale F3 de la coque, et est par exemple une vitre insérée dans le reste de la coque 10, mais elle peut être dans un même matériau que (et venir de matière avec) le reste de la coque (on connait des ABS transparents par exemple). A noter que la zone 100 peut nuire à la sensibilité tactile de l'interface 23 voire l'annuler totalement, mais des modes de réalisation du dispositif proposé permettront comme on le verra plus loin de traiter ce problème.

De façon préférée la coque 10 couvre toute la surface externe du boîtier 20 de sorte à offrir une protection complète.

La coque 10 présente un deuxième port 11 de communications de données adapté pour la communication de données avec le premier port 21 de l'équipement 2. En pratique, le deuxième port 11 est préférentiellement complémentaire du premier port 21 du boîtier 20 de l'équipement 2 (par exemple un connecteur USB si le premier port 21 est un port USB, un connecteur Lightning si le premier port 21 est un port Lightning, etc.), et ainsi un port mâle si le premier port 21 est un port femelle.

La coque 10 est configurée de telle sorte que lorsque la coque 10 reçoit le boîtier 20, le deuxième port 11 est couplé de manière opérationnelle avec le premier port 21 de l'équipement pour la communication de données entre le dispositif 1 et l'équipement 2, i.e. si le premier port 21 et le deuxième port 11 sont des ports mâle et femelle complémentaires ils sont engagés l'un dans l'autre.

Dans ce dernier mode de réalisation, le deuxième port mâle 11 est avantageusement utilisé comme une ancre du boîtier 20. En effet, il faut une translation de la longueur du deuxième port mâle 11 (selon une direction orthogonale à la face inférieur) pour le désengager du premier port femelle 21.

Dans tous les cas, la combinaison du deuxième port 11 et du premier port 21 permet une connexion de l'équipement 2 avec le dispositif 1, et le cas échéant l'alimentation électrique de ce dernier (ou l'inverse comme l'on verra). Ainsi, le dispositif 1 peut être vu comme un accessoire de l'équipement 2, et il sera en pratique contrôlé par ce dernier.

Dans un ou plusieurs modes de réalisation, le dispositif 1 peut avantageusement présenter au moins un exemplaire 21' du premier port 21 de l'équipement 2 connecté au deuxième port 11 de sorte à dupliquer le premier port 21 lorsque le deuxième port 11 est couplé de manière opérationnelle avec le premier port 21. Ainsi, si le premier port 21 est un port femelle, un périphérique muni d'un port mâle (identique au deuxième port 11 du dispositif 1) peut être inséré dans le port femelle 21' exactement comme si c'était dans le port femelle 21 de l'équipement 2. Cela permet à l'équipement 2 d'être connecté à un périphérique, notamment un câble d'alimentation. On notera que dans une telle configuration, c'est le dispositif 1 qui permet l'alimentation électrique de l'équipement 2, et sa recharge.

Le présent dispositif se distingue en ce qu'il comprend en outre au moins un curseur 12, 13 déplaçable le long d'un axe vers une position, en particulier un premier curseur 12 déplaçable le long d'un premier axe vers une première position, et avantageusement un deuxième curseur 13 déplaçable le long d'un deuxième axe vers une deuxième position. Dans la suite de la présente description, on décrira arbitrairement le premier curseur 12, et l'homme du métier pourra appliquer à l'éventuel deuxième curseur 13 toutes les caractéristiques avantageuses du premier curseur 12. Par ailleurs le premier curseur peut tout à fait être le curseur 13. On décrira plus loin un mode de réalisation préféré à deux curseurs 12, 13.

La première position peut être une position de consigne vers laquelle le premier curseur 12 est déplaçable manuellement par l'utilisateur.

Le dispositif 1 comprend donc également un capteur de position dudit premier curseur 12, configuré pour transmettre audit port mâle 11 un signal représentatif de ladite première position (la position de consigne).

Plus précisément, le premier curseur 12 est typiquement une pièce mobile protubérante apte à coulisser dans une glissière 120 (glissière 130 pour le deuxième curseur 13) s'étendant selon ledit premier axe. La glissière définit un intervalle de positions entre deux butées.

Ledit capteur de position est typiquement adapté pour acquérir la position de la pièce mobile protubérante 12, 13 dans la glissière correspondante 120, 130, par exemple au moyen de contacteurs électriques disposés le long de la glissière et d'un potentiomètre (non représentés sur les figures).

La « position de consigne » est ici une entrée de l'utilisateur. Plus précisément, l'utilisateur peut manuellement placer le premier curseur 12 à l'emplacement de son choix sur la glissière 120, la position de consigne définissant une coordonnée permettant de situer le premier curseur 12 sur le premier axe. Le premier curseur 12 est donc un élément d'interface analogique, par opposition aux boutons qui renvoie un signal binaire.

Par commodité, on peut définir que la position de consigne est à valeur dans un intervalle [0 ; 1] où 0 est la position au niveau d'une butée de la glissière 120, 130 et 1 la position au niveau de l'autre butée, l'axe étant arbitrairement orienté d'une butée vers l'autre.

De façon préférée, en référence aux figures, le dispositif 1 comprend à la fois un premier curseur 12 et un deuxième curseur 13, déplaçables respectivement le long du premier axe et du deuxième axe, vers une première et une deuxième positions (deux positions de consigne). Le cas échéant ou trouve donc deux capteurs configurés pour transmettre audit équipement 2 deux signaux représentatifs des deux positions de consigne.

Le premier et le deuxième axe sont avantageusement non-colinéaires et préférentiellement sensiblement orthogonaux, pour former un repère.

Si la coque 10 présente une face frontale F3 pour une interface 23 de l'équipement 2 lorsque la coque 10 reçoit le boîtier 20 (la face de la zone transparente 100), lesdits premier et deuxième axe sont sensiblement coplanaires à ladite face frontale F3.

On peut ainsi définir une première et une deuxième faces F1, F2 de la coque 10, telles que le premier axe s'étend sur la première face F1 de la coque 10 et le deuxième axe s'étend sur une deuxième face F2 de la coque 10.

Lorsque lesdits premier et deuxième axes sont sensiblement coplanaires à ladite face frontale F3, les première et deuxième faces F1, F2 sont sensiblement perpendiculaires entre elles et à ladite face frontale F3. De façon préférée, les glissières 120, 130 s'étendent sur les faces F1, F2 sur toute ou partie de la largeur/longueur de l'interface 23.

Ici le terme « sensiblement » s'entend à une dizaine de degrés près, et l'homme du métier reconnaitra ce caractère perpendiculaire dès lors que la coque présente six faces deux à deux opposées.

Si la coque 10 présente une forme parfaitement perpendiculaire les faces voisines sont toujours exactement perpendiculaires, mais en pratique les équipements de type smartphone 2 ont des boîtiers 20 avec des faces non parfaitement planes de sortes que certaines des faces de la coque 10 peuvent être bombées, et ainsi non exactement perpendiculaires au niveau des arêtes.

Dans l'exemple des figures, la première face F1 est une face supérieure, opposée à la face inférieure au niveau de laquelle ou trouve les ports 11, 21, et la deuxième F2 est une face latérale, en particulier la face de droite (mais le dispositif proposé peut être agencé dans d'autres modes de réalisation pour que ce soit la face de gauche).

Cela signifie que le premier axe correspond à un axe s'étendant de gauche à droite dans le référentiel de l'interface 23, en d'autres termes un « axe des X », et le deuxième axe correspond à un axe s'étendant de bas en haut dans le référentiel de l'interface 23, en d'autres termes un « axe des Y ». Ces deux axes définissent ainsi un repère (orthogonal) dans lequel les première et deuxième positions des curseurs 12, 13 correspondent à des coordonnées.

On voit même qu'il y a une bijection entre une coordonnée dans le référentiel de l'interface 23 et un couple de positions des curseurs 12, 13.

Il devient ainsi possible d'utiliser les curseurs 12, 13 comme substituts à une interface 23 de type écran tactile ou à un autre moyen de pointage comme une souris. En d'autres termes, l'utilisateur souhaitant désigner (i.e. cibler, et toucher dans le cas tactile) un point de l'interface 23 peut à la place déplacer les curseurs 12, 13 vers un couple de positions de consigne correspondant à ce point de l'interface, et l'équipement 2 reçoit un couple de signaux représentatifs de ces positions de consigne. Cela est d'autant plus facile si la longueur des glissières 120, 130 correspond aux dimensions de l'écran de l'interface 23, l'utilisateur pouvant alors aligner les curseurs 12, 13 avec le point sur l'écran qu'il souhaite désigner.

Les signaux envoyés via le deuxième port 11 sont destinés au module de traitement de données 22 de l'équipement 2, de sorte à être interprétés et traité comme des commandes.

Pour cela, une application dédiée ou intégrée au système d'exploitation (en anglais « Operating System », ou OS) (notamment via une interface de programmation application (en anglais « Application Programming Interface », ou API)) peut être mise en oeuvre sur l'équipement 2. Dans un ou plusieurs modes de réalisation, les fonctionnalités du dispositif 1 sont configurées pour pouvoir être exploitées par des applications diverses. Pour ce faire un kit de développement logiciel peut être fourni ou une interface API peut être mise à disposition avec le dispositif 1 de sorte à prévoir le développement de ces applications.

On notera que le dispositif proposé n'est pas limité à des modes de réalisation avec un couple de curseurs 12, 13, et qu'il peut en comprendre un seul, en particulier le curseur latéral 13. Cela suffit pour, dans un ou plusieurs modes de réalisation, faire défiler une liste, régler la valeur d'un paramètre sur l'interface 23 (en particulier sur une application spécialisée), par exemple une ouverture de vanne, de volet, une intensité de lumière, de débit, etc., et donc réaliser un grand nombre d'actions à accomplir sur un smartphone tactile de contrôle d'équipements industriels.

Par ailleurs, on peut dans un ou plusieurs modes de réalisation utiliser le premier curseur 12 comme organe de confirmation lors d'une commande importante (par exemple lancement d'une opération dangereuse) ou d'un acquittement manuel (par exemple demander à l'utilisateur de confirmer qu'il a bien reçu une information ou un message). En effet, une confirmation par un simple appui sur un bouton apparait peu sécurisée et peut être effectuée par mégarde par un utilisateur, alors que le premier curseur 12 permet des manipulations plus complexes qui ne peuvent être faites par hasard. Par exemple on peut prévoir qu'une commande n'est confirmée que si l'utilisateur fait un aller-retour complet du premier curseur 12, tenir une ou plusieurs positions de consigne prédéterminées pendant un temps donné, effectuer un appui sur un bouton une fois que le premier curseur 12 est placé dans une position prédéterminée, ou effectuer une combinaison de plusieurs actions parmi celles précitées.

Le dispositif 1 peut en outre, dans un ou plusieurs modes de réalisation, grâce aux curseurs 12, 13, jouer un rôle de dispositif « homme-mort » (ou dispositif de Protection du Travailleur Isolé), en situation de danger potentiel, en imposant un déplacement régulier d'un ou plusieurs curseurs 12, 13.

Dans un ou plusieurs modes de réalisation, l'émission de signaux par le dispositif 1 peut être contrôlé par un microcontrôleur du ou des capteurs.

Par ailleurs, le dispositif 1 comprend en outre au moins un bouton 14. Le ou les boutons 14 sont configurés pour transmettre audit port mâle 11 lorsqu'il est pressé un signal correspondant (qui est cette fois binaire comme expliqué).

Le bouton 14 peut simuler un clic (ou un toucher si l'on souhaite émuler une interface tactile). Dans le cas de deux boutons 14, l'un peut simuler un clic gauche et l'autre un clic droit (respectivement un toucher normal et un toucher « appuyé »). D'autres boutons 14 peuvent être prévus, le cas échéant avec des fonctionnalités configurables par l'utilisateur (par exemple des raccourcis).

Le même microcontrôleur peut gérer l'émission des différents signaux associés aux curseurs 12, 13 et/ou boutons 14.

Selon un premier mode de réalisation, dès lors qu'un curseur 12, 13 est déplacé par l'utilisateur vers une position de consigne, un signal est envoyé à l'équipement 2 via le deuxième port 11. Un tel mode de fonctionnement reproduit par exemple l'utilisation d'une souris, qu'il est possible de déplacer sans cliquer.

Selon un deuxième mode de réalisation, le capteur de position du curseur 12, 13 est configuré pour transmettre audit port mâle 11 ledit signal représentatif de la position de consigne lorsque le bouton 14 est pressé, et préférentiellement uniquement lorsque le bouton 14 est pressé. En d'autres termes, déplacer les curseurs sans toucher le bouton n'a pas d'incidence. Un tel fonctionnement reproduit par exemple l'utilisation d'une interface tactile, où l'utilisateur peut lâcher l'écran, revenir à un autre point, etc.

Dans l'un ou l'autre des modes de réalisation, la notion de clic et la gestion des positions de consigne peut être entièrement réalisée par le module de traitement de données 22 de l'équipement 2.

Ainsi de façon particulièrement préférée, le dispositif 1 permet de « simuler » des stimulations d'une interface 23 de l'équipement 2. Plus précisément, l'éventuelle application dédiée ou l'API de l'OS peut se contenter de générer une stimulation virtuelle de l'interface 23, et de l'utiliser au même titre qu'une stimulation conventionnelle. Par exemple, si l'interface 23 est un écran tactile, le module de traitement de données 22 traite le signal représentatif de la ou les positions de consigne comme un signal de toucher provenant de l'interface 23.

En d'autres termes, au lieu de tenter de maintenir la sensibilité tactile de l'interface 23 malgré le dispositif de protection 1, on permet des stimulations tactiles « indirectes » via les curseurs 12, 13. Le boîtier 1 peut ainsi être vu comme opérant entre autres une duplication de l'interface 23.

Plus précisément, on peut soit prévoir que l'équipement 2 traite le signal représentatif de la ou les positions de consigne comme un signal issu d'une interface alternative à l'interface 23, soit simuler directement une stimulation de l'interface 23.

En d'autres termes, dans ce dernier cas, l'application dédiée ou intégrée à l'OS qui traite le signal représentatif de la ou les positions de consigne interagit avec l'API de l'OS qui contrôle l'interface 23 et lui envoie des données de sorte à lui faire croire que l'interface 23 est stimulée.

Cela permet d'utiliser le dispositif 1 de façon universelle avec n'importe quelle fonctionnalité ou application existante (qui ne fera pas la différence entre une stimulation tactile classique et l'utilisation des curseurs 12, 13), et donc de continuer à utiliser l'équipement 2 de façon conventionnelle malgré la coque 10 du dispositif de protection 1.

Dans ces modes de réalisation, la robustesse est donc améliorée, sans qu'il soit nécessaire de modifier les logiciels de l'équipement 2, et sans perte de fonctionnalités.

La première position peut être une position cible vers laquelle le premier curseur est déplaçable automatiquement (et non manuellement par l'utilisateur).

Le dispositif 1 comprend donc en outre un actionneur du premier curseur 12 (non représenté sur les figures), de préférence un actionneur pour chaque curseur 12, 13. L'actionneur est configuré pour, lorsqu'il reçoit depuis le deuxième port 11 un signal représentatif de la première position (position cible), déplacer le premier curseur 12 vers ladite position.

Le curseur 12, et éventuellement le curseur 13, est à la fois déplaçable manuellement vers une position de consigne et automatiquement vers une position cible. En d'autres termes, le curseur 12, et éventuellement le curseur 13, peut servir à la fois d'interface d'entrée (« input » de commandes) et/ou d'interface de sortie (« output » d'informations).

Pour clarifier la présente description, on appelle « position cible » une position d'un curseur 12, 13 ordonnée par l'équipement 2 (déplacement motorisé), par opposition à une « position de consigne », correspondant à une position du curseur 12, 13 suite à manipulation de l'utilisateur (déplacement manuel).

Une telle fonctionnalité peut à nouveau être mise en oeuvre par une application dédiée ou intégrée au système d'exploitation (notamment via une API) sur l'équipement 2.

Ce mode de réalisation permet tout d'abord un retour haptique (prenant souvent la forme d'une vibration), i.e. un acquittement d'une commande : l'utilisateur sait que les positions de consigne qu'il a choisies ont été prises en compte.

Il est par ailleurs possible de repositionner contextuellement les curseurs, par exemple pour initialiser un réglage, ou produire un retour de force, typiquement pour avertir un utilisateur en télé-opération, lors du réglage d'une valeur analogique, qu'il dépasse un seuil.

En effet, les curseurs 12, 13 sont des éléments physiques dont la position est immédiatement lisible et palpable dans des conditions de faible visibilité ou simplement d'urgence, y compris en portant des gants.

Dans un ou plusieurs modes de réalisation, on peut équiper le ou les curseurs 12, 13 de sources lumineuses telles qu'une diode électroluminescente pour augmenter encore leur visibilité.

A noter que l'actionneur peut avoir le rôle de capteur de position : lorsqu'il reçoit un signal électrique il déplace le curseur 12, 13, mais lorsque le curseur 12, 13 est manuellement déplacé il va générer en réponse au mouvement forcé un signal électrique correspondant. Il est possible d'interpréter ce signal électrique de « réaction » comme un signal représentatif de la première position du premier curseur, et donc d'utiliser l'actionneur comme capteur.

Selon un deuxième aspect la présente divulgation propose un ensemble d'un équipement électronique 2 (en particulier de type smartphone ou tablette tactile) et d'un dispositif de protection selon le premier aspect.

L'équipement électronique 2 peut comprendre comme expliqué ci-dessus en référence à la figure 1 un boîtier 20 présentant un premier port 21 et un module de traitement de données 22. Ce dernier est configuré pour recevoir un signal représentatif d'une première position (position de consigne) d'un premier curseur 12 depuis un dispositif 1 de protection de l'équipement 2, lorsque le capteur de position du curseur 12 est connecté au module de traitement de données 22 via un deuxième port 11 (de la coque 10 du dispositif 1) couplé de manière opérationnelle avec le premier port 21 (en particulier le port mâle 11 de la coque 10 engagé dans le port femelle 21 du boîtier 20). La coque 10 reçoit alors le boiter 20.

Le module 22 peut contrôler l'équipement 2 en fonction dudit signal reçu. Lorsque l'équipement 2 comprend une interface 23, le module de traitement de données 22 est avantageusement configuré pour interpréter le signal représentatif de la position de consigne comme une commande, voire simuler une stimulation de l'interface 23 en fonction du signal représentatif de la position de consigne, comme expliqué précédemment, en particulier dans les modes de réalisation où l'équipement 2 comprend deux curseurs 12, 13 déplaçables selon deux axes respectifs non colinéaires (par exemple sensiblement orthogonaux) transmettant chacun un signal représentatif d'une position.

Dans ce cas de figure, lorsque l'interface 23 comprend un écran tactile, la stimulation de l'interface 23 simulée peut correspondre à une stimulation de l'écran tactile par un toucher au niveau d'un point de coordonnées données de l'écran, et ces coordonnées sont alors avantageusement déterminées par le module 22 en fonction des positions respectives des curseurs 12, 13. Plus précisément, et dans un mode de réalisation préféré où les axes des curseurs 12, 13 coïncident avec les axes le long desquels l'écran de l'interface 23 s'étend respectivement en longueur et en largeur, la première coordonnée peut être déterminée proportionnelle à la première position du premier curseur 12, et la deuxième cordonnée peut être déterminée proportionnelle à la deuxième position du deuxième curseur 13.

Dans un ou plusieurs modes de réalisation, comme expliqué les curseurs 12, 13 sont mécanisés et peuvent être déplacés vers une position cible. Dans ce cas le signal représentatif d'une position cible peut avantageusement être généré par le module de traitement de données 22.

Dans un cas de retour haptique, le module de traitement de données 22 peut être configuré pour émettre le signal représentatif d'une position cible suite à la réception du signal représentatif de ladite position de consigne

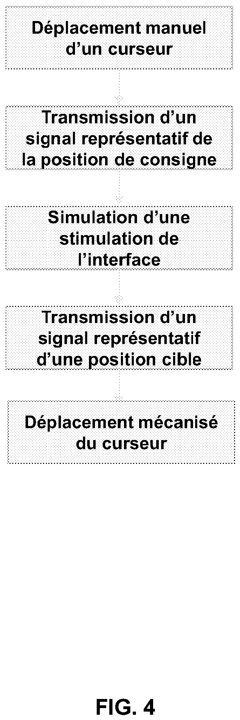

Selon un troisième aspect, est proposé en référence à la **figure 4** le procédé de contrôle de l'équipement 2 par le dispositif 1 au sein d'un ensemble selon le deuxième aspect.

L'équipement électronique 2 et le dispositif 1 (protégeant l'équipement 2) sont connectés via le deuxième port 11 de la coque 10 et le premier port femelle 21 du boîtier 20 couplé de manière opérationnelle.

Le procédé proposé comprend une transmission (a) au module de traitement de données 22, depuis le capteur de position du premier curseur 12, d'un signal représentatif de la première position du premier curseur 12 (position de consigne, le cas échéant suite à un déplacement manuel du premier curseur 12 par l'utilisateur), et éventuellement depuis le capteur de position du deuxième curseur 13, d'un signal représentatif de la deuxième position du deuxième curseur 13, en fonction duquel ou desquels le module de traitement de données 22 peut commander des fonctionnalités de l'équipement 2.

Notamment, si l'équipement 2 comprend une interface 23 en particulier de type écran tactile, le procédé peut pour cela comprendre une simulation (b), par le module de traitement de données 22, d'une stimulation de l'interface 23 en fonction du signal représentatif de la position du curseur 12, 13, par exemple un toucher d'un écran tactile. Cette stimulation virtuelle est traitée par l'équipement 2 comme une stimulation normale de l'interface 23.

En réponse, le module 22 peut générer et transmettre (c), à un actionneur du curseur 12, 13, un signal représentatif d'une position cible, en particulier en tant que retour haptique (acquittement de la commande), pour déplacement mécanisé du curseur 12, 13.

En fonction du mode de réalisation choisi, certains actes, actions, évènements ou fonctions de chacune des méthodes décrites dans le présent document peuvent être effectués ou se produire selon un ordre différent de celui dans lequel ils ont été décrits, ou peuvent être ajoutés, fusionnés ou bien ne pas être effectués ou ne pas se produire, selon le cas. En outre, dans certains modes de réalisation, certains actes, actions ou évènements sont effectués ou se produisent concurremment et non pas successivement.

Bien que décrits à travers un certain nombre d'exemples de réalisation détaillés, les procédés proposés et équipements pour la mise en oeuvre des procédés comprennent différentes variantes, modifications et perfectionnements qui apparaîtront de façon évidente à l'homme de l'art, étant entendu que ces différentes variantes, modifications et perfectionnements font partie de la portée de l'invention, telle que définie par les revendications qui suivent. De plus, différents aspects et caractéristiques décrits ci-dessus peuvent être mis en oeuvre ensemble, ou séparément, ou bien substitués les uns aux autres, et l'ensemble des différentes combinaisons et sous combinaisons des aspects et caractéristiques font partie de la portée de l'invention. En outre, il se peut que certains systèmes et équipements décrits ci-dessus n'incorporent pas la totalité des modules et fonctions décrits pour les modes de réalisation préférés.

## Revendications

1. Dispositif de protection (1) pour un équipement électronique (2) comprenant un boîtier (20) présentant un premier port (21) de communications de données, le dispositif (1) comprenant :
- une coque (10) adaptée pour recevoir le boîtier (20) de l'équipement électronique (2), présentant un deuxième port (11) de communications de données adapté pour la communication de données avec le premier port (21) de l'équipement électronique (2), telle que lorsque la coque (10) reçoit le boîtier (20) le deuxième port (11) est couplé de manière opérationnelle avec le premier port (21) de l'équipement pour la communication de données entre le dispositif de protection et l'équipement électronique (2) ;
- un premier curseur déplaçable le long d'un premier axe vers une première position, la première position étant une position de consigne ou une position cible, la position de consigne étant une position vers laquelle le premier curseur (12) est déplaçable manuellement par l'utilisateur, le dispositif comprenant en outre un capteur de position du premier curseur (12), configuré pour transmettre à l'équipement électronique (2), par le biais du deuxième port (11), un signal représentatif de la première position du premier curseur (12), le dispositif étant **caractérisé en ce qu'**il comprend :
- au moins un bouton (14), le capteur de position du premier curseur (12) étant en outre configuré pour transmettre à l'équipement électronique (2), sur actionnement du bouton (14) par un utilisateur, le signal représentatif de la première position du premier curseur (12) ;
- un actionneur couplé de manière opérationnelle au premier curseur (12) et configuré pour, lorsqu'il reçoit depuis l'équipement électronique (2) un signal représentatif de la position cible, déplacer le premier curseur (12) vers la position cible.

2. Dispositif selon la revendication 1, dans lequel le premier curseur (12) est une pièce mobile protubérante apte à coulisser dans une glissière (120) s'étendant selon le premier axe, le capteur de position étant adapté pour acquérir la position de la pièce mobile protubérante dans la glissière (120).

3. Dispositif selon l'une des revendications 1 ou 2, comprenant en outre un deuxième curseur (13), déplaçable le long d'un deuxième axe, vers une deuxième position.

4. Dispositif selon la revendication 3, dans lequel le premier axe et le deuxième axe sont non-colinéaires, préférentiellement sensiblement orthogonaux.

5. Dispositif selon l'une des revendications 3 et 4, dans lequel la coque (10) présente une face frontale (F3) pour une interface (23) de l'équipement électronique (2) lorsque la coque (10) reçoit le boîtier (20), les premier et deuxième axes étant sensiblement coplanaires à la face frontale (F3).

6. Ensemble d'un équipement électronique (2) comprenant un boîtier (20) présentant un premier port (21) de communication de données, et un module de traitement de données (22) ; et d'un dispositif de protection (1) de l'équipement selon l'une des revendications 1 à 5, connectés via le deuxième port (11) de communications de données couplé de manière opérationnelle avec le premier port (21) pour la communication de données entre le dispositif de protection (1) et l'équipement électronique (2).

7. Ensemble selon la revendication 6, dans lequel l'équipement électronique (2) comprend une interface (23) de type écran tactile et le dispositif (1) est configuré pour transmettre à l'équipement électronique (2), par le biais du deuxième port (11), un signal représentatif de la première position du premier curseur (12), le module de traitement de données (22) étant configuré pour simuler une stimulation de l'interface (23) en fonction du signal représentatif de ladite position de consigne.

8. Ensemble selon l'une des revendications 6 et 7, dans lequel le dispositif (1) est selon l'une des revendications 1 à 5, le signal représentatif d'une position cible étant généré par le module de traitement de données (22).

9. Procédé de contrôle d'un équipement électronique (2) comprenant un boîtier (20) présentant un premier port (21) de communications de données, et un module de traitement de données (22) ; le procédé étant **caractérisé en ce qu'**il est mis en oeuvre par un dispositif de protection (1) de l'équipement (2) selon la revendication 1, le dispositif (1) et l'équipement (2) étant connectés pour des communications de données via des premier et deuxième ports (21, 11) de communications de données respectifs couplés de manière opérationnelle; le procédé étant en outre **caractérisé en ce qu'**il comprend :
une transmission au module de traitement de données (2), depuis le capteur de position du premier curseur (12), du signal représentatif de la première position du premier curseur (12).

## Patentansprüche

1. Schutzvorrichtung (1) für ein elektronisches Gerät (2), das ein Gehäuse (20), das einen ersten Datenkommunikationsanschluss (21) aufweist, beinhaltet, wobei die Vorrichtung (1) Folgendes beinhaltet:
- eine Hülle (10), die dazu angepasst ist, das Gehäuse (20) des elektronischen Geräts (2) aufzunehmen, und einen zweiten Datenkommunikationsanschluss (11) aufweist, der für die Kommunikation von Daten mit dem ersten Anschluss (21) des elektronischen Geräts (2) angepasst ist, sodass, wenn die Hülle (10) das Gehäuse (20) aufnimmt, der zweite Anschluss (11) für die Kommunikation von Daten zwischen der Schutzvorrichtung und dem elektronischen Gerät (2) betriebsfähig mit dem ersten Anschluss (21) des Geräts gekoppelt ist;
- einen ersten Schieber, der entlang einer ersten Achse in eine erste Position verschiebbar ist, wobei die erste Position eine Sollposition oder eine Zielposition ist, wobei die Sollposition eine Position ist, in die der erste Schieber (12) von dem Benutzer manuell verschoben werden kann, wobei die Vorrichtung ferner einen Positionssensor für den ersten Schieber (12) beinhaltet, der dazu konfiguriert ist, mittels des zweiten Anschlusses (11) ein Signal, das für die erste Position des ersten Schiebers (12) repräsentativ ist, an das elektronische Gerät (2) zu übertragen, wobei die Vorrichtung **dadurch gekennzeichnet ist, dass** sie Folgendes beinhaltet:
- mindestens einen Knopf (14), wobei der Positionssensor für den ersten Schieber (12) ferner dazu konfiguriert ist, bei Betätigung des Knopfes (14) durch einen Benutzer das Signal, das für die erste Position des ersten Schiebers (12) repräsentativ ist, an das elektronische Gerät (2) zu übertragen;
- einen Aktor, der betriebsfähig mit dem ersten Schieber (12) gekoppelt ist und dazu konfiguriert ist, wenn er von dem elektronischen Gerät (2) ein Signal, das für die Zielposition repräsentativ ist, empfängt, den ersten Schieber (12) in die Zielposition zu verschieben.

2. Vorrichtung nach Anspruch 1, wobei der erste Schieber (12) ein vorstehendes bewegliches Teil ist, das dazu fähig ist, in einer Schiene (120), die sich gemäß der ersten Achse erstreckt, zu gleiten, wobei der Positionssensor dazu angepasst ist, die Position des vorstehenden beweglichen Teils in der Schiene (120) zu erfassen.

3. Vorrichtung nach einem der Ansprüche 1 oder 2, die ferner einen zweiten Schieber (13) beinhaltet, der entlang einer zweiten Achse in eine zweite Position verschiebbar ist.

4. Vorrichtung nach Anspruch 3, wobei die erste Achse und die zwei Achse nicht kollinear, vorzugsweise im Wesentlichen orthogonal sind.

5. Vorrichtung nach einem der Ansprüche 3 und 4, wobei die Hülle (10) eine Vorderseite (F3) für eine Benutzeroberfläche (23) des elektronischen Geräts (2) aufweist, wenn die Hülle (10) das Gehäuse (20) aufnimmt, wobei die erste und die zweite Achse zu der Vorderseite (F3) im Wesentlichen komplanar sind.

6. Anordnung aus einem elektronischen Gerät (2), das ein Gehäuse (20), das einen ersten Datenkommunikationsanschluss (21) aufweist, und ein Datenverarbeitungsmodul (22) beinhaltet; und einer Schutzvorrichtung (1) für das Gerät nach einem der Ansprüche 1 bis 5, die für die Kommunikation von Daten zwischen der Schutzvorrichtung (1) und dem elektronischen Gerät (2) über den zweiten Datenkommunikationsanschluss (11), der mit dem ersten Anschluss (21) betriebsfähig gekoppelt ist, miteinander verbunden sind.

7. Anordnung nach Anspruch 6, wobei das elektronische Gerät (2) eine Benutzeroberfläche (23) vom Typ Touchscreen beinhaltet und die Vorrichtung (1) dazu konfiguriert ist, ein Signal, das für die erste Position des ersten Schiebers (12) repräsentativ ist, mittels des zweiten Anschlusses (11) an das elektronische Gerät (2) zu übertragen, wobei das Datenverarbeitungsmodul (22) dazu konfiguriert ist, eine Aktivierung der Benutzeroberfläche (23) in Abhängigkeit von dem Signal, das für die Sollposition repräsentativ ist, zu simulieren.

8. Anordnung nach einem der Ansprüche 6 und 7, wobei die Vorrichtung (1) einem der Ansprüche 1 bis 5 entspricht, wobei das Signal, das für eine Zielposition repräsentativ ist, durch das Datenverarbeitungsmodul (22) erzeugt wird.

9. Verfahren zur Steuerung eines elektronischen Geräts (2), das ein Gehäuse (20), das einen ersten Datenkommunikationsanschluss (21) aufweist, und ein Datenverarbeitungsmodul (22) beinhaltet;
wobei das Verfahren **dadurch gekennzeichnet ist, dass** es durch eine Schutzvorrichtung (1) für das Gerät (2) nach Anspruch 1 umgesetzt wird, wobei die Vorrichtung (1) und das Gerät (2) für Datenkommunikationen über einen ersten bzw. zweiten Datenkommunikationsanschluss (21, 11), die betriebsfähig gekoppelt sind, miteinander verbunden sind; wobei das Verfahren ferner **dadurch gekennzeichnet ist, dass** es Folgendes beinhaltet:
eine Übertragung des Signals, das für die erste Position des ersten Schiebers (12) repräsentativ ist, von dem Positionssensor für den ersten Schieber (12) an das Datenverarbeitungsmodul (2).

## Claims

1. Protection device (1) for an electronic equipment (2) comprising a housing (20) having a first data communication port (21), the device (1) comprising:
- a case (10) suitable for accommodating the housing (20) of the electronic equipment (2), having a second data communication port (11) suitable for communicating data with the first port (21) of the electronic equipment (2), such that, when the case (10) accommodates the housing (20), the second port (11) is coupled operationally with the first port (21) of the equipment for communicating data between the protection device and the electronic equipment (2);
- a first slider which can be moved along a first axis towards a first position, the first position being a setpoint position or a target position, the setpoint position being a position towards which the first slider (12) can be moved manually by the user, the device further comprising a position sensor for sensing the position of the first slider (12), configured to transmit, to the electronic equipment (2) via the second port (11), a signal which is representative of the first position of the first slider (12), the device being **characterized in that** it comprises:
- at least one button (14), the position sensor for sensing the position of the first slider (12) further being configured to transmit, to the electronic equipment (2), upon actuation of the button (14) by a user, the signal which is representative of the first position of the first slider (12);
- an actuator coupled operationally to the first slider (12) and configured to, when it receives a signal which is representative of the target position from the electronic equipment (2), move the first slider (12) towards the target position.

2. Device according to Claim 1, wherein the first slider (12) is a protruding movable part which is capable of sliding within a guide (120) extending along the first axis, the position sensor being suitable for acquiring the position of the protruding movable part in the guide (120) .

3. Device according to either of Claims 1 and 2, further comprising a second slider (13), which can be moved along a second axis towards a second position.

4. Device according to Claim 3, wherein the first axis and the second axis are non-collinear, and preferably substantially orthogonal.

5. Device according to either of Claims 3 and 4, wherein the case (10) has a front face (F3) for an interface (23) for the electronic equipment (2) when the case (10) accommodates the housing (20), the first and second axes being substantially coplanar with the front face (F3).

6. Assembly of an electronic equipment (2) comprising a housing (20) having a first data communication port (21) and a data processing module (22); and of a protection device (1) for the equipment according to one of Claims 1 to 5, which are connected via the second data communication port (11) which is coupled operationally with the first port (21) for communicating data between the protection device (1) and the electronic equipment (2) .

7. Assembly according to Claim 6, wherein the electronic equipment (2) comprises a touchscreen interface (23) and the device (1) is configured to transmit, to the electronic equipment (2) via the second port (11), a signal which is representative of the first position of the first slider (12), the data processing module (22) being configured to simulate a stimulation of the interface (23) according to the signal which is representative of said first setpoint position.

8. Assembly according to either of Claims 6 and 7, wherein the device (1) is according to one of Claims 1 to 5, the signal which is representative of a target position being generated by the data processing module (22) .

9. Method for controlling an electronic equipment (2) comprising a housing (20) having a first data communication port (21) and a data processing module (22) ;
the method being **characterized in that** it is implemented by a protection device (1) for the equipment (2) according to Claim 1, the device (1) and the equipment (2) being connected for data communication via operationally coupled respective first and second data communication ports (21, 11); the method being further **characterized in that** it comprises:
transmitting, to the data processing module (2), from the position sensor for sensing the position of the first slider (12), the signal which is representative of the first position of the first slider (12).
